(19) Europäisches Patentamt
European Patent Office
Office européen des brevets

(11) EP 0 818 480 B1

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(51) Int Cl.$^7$: **C08F 279/02**, C08F 279/04, C08L 55/02

(21) Anmeldenummer: **97110359.3**

(22) Anmeldetag: **25.06.1997**

(54) **Hochzähe ABS-Formmassen**

High toughness ABS mouldings

Masses à mouler d'ABS à haute ténacité

(84) Benannte Vertragsstaaten:
**BE DE ES FR GB IT NL**

(30) Priorität: **08.07.1996 DE 19627423**

(43) Veröffentlichungstag der Anmeldung:
**14.01.1998 Patentblatt 1998/03**

(73) Patentinhaber: **BAYER AG**
**51368 Leverkusen (DE)**

(72) Erfinder:
- **Eichenauer, Herbert, Dr.**
  **41539 Dormagen (DE)**
- **Schmidt, Adolf, Dr.**
  **51061 Köln (DE)**
- **Alberts, Heinrich, Dr.**
  **51519 Odenthal (DE)**

(56) Entgegenhaltungen:
**EP-A- 0 678 531**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 818 480 B1

Printed by Jouve, 75001 PARIS (FR)

## Beschreibung

Die Erfindung betrifft in Emulsion hergestellte Pfropfpolymerisate vom ABS-Typ und darauf basierende thermoplastische Formmassen mit gegenüber bekannten ABS-Formmassen sehr stark erhöhter Kerbschlagzähigkeit bei gleichzeitig hohen Härtewerten bzw. hohen Modulwerten und guter thermoplastischer Verarbeitbarkeit.

ABS-Formmassen sind Zweiphasenkunststoffe aus:

I. einem thermoplastischen Copolymerisat aus Styrol und Acrylnitril, in dem das Styrol ganz oder teilweise durch $\alpha$-Methylstyrol oder Methylmethacrylat ersetzt werden kann; dieses Copolymerisat, auch als SAN-Harz oder Matrix-Harz bezeichnet, bildet die äußere Phase;

II. mindestens einem Pfropfpolymerisat, welches hergestellt worden ist durch Pfropfreaktion eines oder mehrerer der unter I. genannten Monomeren auf Butadien-Homo- oder Copolymerisat ("Pfropfgrundlage"). Dieses Pfropfpolymerisat ("Elastomerphase" oder "Pfropfkautschuk") bildet die disperse Phase im Matrixharz.

Bei gleicher Matrix wird die Zähigkeit einer ABS-Formmasse im wesentlichen durch den darin enthaltenen Pfropfkautschuk bestimmt. Die mit üblichen ABS-Formmassen erreichbare Zähigkeit reicht jedoch für stark beanspruchte Formteile noch nicht immer mit der notwendigen Sicherheit aus oder aber werden hohe Zähigkeitswerte auf Kosten anderer Eigenschaften der Formteile erzielt.

Es besteht daher Bedarf an hocheffektiven Pfropfkautschuken, auf deren Basis ABS-Formmassen mit sehr hoher Zähigkeit hergestellt werden können, ohne daß die sonstigen Eigenschaften negativ verändert werden.

Es wurde nun gefunden, daß bei gleichzeitiger Verwendung eines speziellen Gemisches mindestens zweier genau definierter Kautschuklatices und definierten Einsatzmengen an speziellen radikalischen Inititatorverbindungen und Emulgatoren bei der Pfropfkautschukherstellung, sowie vorzugsweise durch Einhaltung spezieller Reaktionsbedingungen, ABS-Formmassen mit sehr hohen Werten für Schlagzähigkeit erhalten werden.

Die Verwendung von Kautschuklatex-Gemischen bei der Herstellung von Pfropfkautschuken für ABS-Formmassen ist zwar bekannt, die Qualitätsanforderungen werden allerdings nicht erfüllt.

So sind z.B. aus der DE-AS 1 813 719 zähe, gut verarbeitbare ABS-Formmassen bekannt, die erhalten werden durch einstufige, unter Druck ablaufende Emulsions-Pfropfpolymerisation von 75 bis 90 Gew.-Teilen eines Monomerengemisches auf 10 bis 25 Gew.-Teile eines Gemisches zweier Kautschuklatices, wovon einer ein reines Polybutadien und der andere ein SBR-Latex mit einem Styrolgehalt <50% und einer bestimmten Teilchengröße ist.

Die US-PS 3 509 238 beschreibt ABS-Produkte, die unter Verwendung zweier Pfropfpolymerisate hergestellt werden, von denen eines schwach, das andere stark gepfropft ist. Diese Produkte haben jedoch unzureichende Eigenschaften bei tiefen Temperaturen.

In der US-PS 3 928 494 sind ABS-Produkte mit zwei verschieden stark gepfropften Pfropfpolymerisaten beschrieben, bei denen das schwächer bepfropfte feinteilige Material sich bei Sprühtrocknung oder Koagulation zu Teilchenaggregaten zusammenlagert. Derartige Aggregate stellen locker gebundene Gebilde dar, die unter hohen Temperaturen und Scherkräften, wie sie beispielsweise bei der Spritzgußverarbeitung auftreten können, wieder auseinandergerissen werden und dann zu nicht ausreichenden Produktzähigkeiten führen.

In der EP-A 116 330 werden ABS-Formmassen auf Basis zweier unterschiedlicher Butadienpolymerisate mit einem speziellen Pfropfstellenabstand der aus den Butadienpolymerisaten hergestellten Pfropfpolymerisate beschrieben. Diese Produkte weisen zwar eine gute Zähigkeit bei Raumtemperatur auf, die Werte für Härte und thermoplastische Fließfähigkeit sind jedoch für hohe Anforderungen nicht ausreichend.

Gegenstand der Erfindung sind thermoplastische Formmassen vom ABS-Typ aus

I) mindestens einem Pfropfpolymerisat, erhalten durch Emulsionspolymerisation von Styrol und Acrylnitril im Gewichtsverhältnis 90:10 bis 50:50, wobei Styrol und/oder Acrylnitril ganz oder teilweise ersetzt werden kann durch $\alpha$-Methylstyrol, Methylmethacrylat oder N-Phenylmaleinimid, in Gegenwart von mindestens zwei Butadienpolymerisatlatices vom Typ (A) und (B), welche jeweils 0 bis 50 Gew.-% eines weiteren Vinylmonomeren copolymerisiert enthalten und wobei das Massenverhältnis von eingesetzten Monomeren zu eingesetzten Butadienpolymerisaten 20:80 bis 80:20, vorzugsweise 30:70 bis 75:25 beträgt, und

II) mindestens einem Copolymerisat aus Styrol und Acrylnitril im Gewichtsverhältnis 90:10 bis 50:50, wobei Styrol und/oder Acrylnitril ganz oder teilweise durch $\alpha$-Methylstyrol oder Methylmethacrylat oder N-Phenylmaleinimid ersetzt werden kann,

dadurch gekennzeichnet, daß

i) der Butadienpolymerisatlatex (A) einen Teilchendurchmesser $d_{50}$ ≤320 nm, vorzugsweise 260 bis 310 nm, eine Breite der Teilchengrößenverteilung (gemessen als $d_{90}$-$d_{10}$ aus der integralen Teilchengrößenverteilung) von 30 bis 100 nm, vorzugsweise von 40 bis 80 nm, und einen Gelgehalt ≤70 Gew.-%, vorzugsweise 40 bis 65 Gew.-%, besitzt und der Butadienpolymerisatlatex (B) einen Teilchendurchmesser $d_{50}$ ≥370 nm, vorzugsweise 380 bis 450 nm, eine Breite der Teilchengrößenverteilung (gemessen als $d_{90}$-$d_{10}$ aus der integralen Teilchengrößenverteilung) von 50 bis 500 nm, vorzugsweise von 100 bis 400 nm, und einen Gelgehalt ≥70 Gew.-%, vorzugsweise 75 bis 90 Gew.-%, aufweist,

ii) als Radikalbildner bei der Pfropfpolymerisatherstellung mindestens eine Verbindung der allgemeinen Formel R

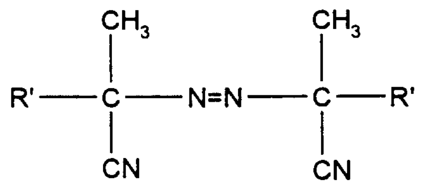

R

mit R' = $C_2H_5$, $C_3H_7$, $C_4H_9$,
in Mengen von 1 bis 5 Gew.-%, vorzugsweise 1,5 bis 3 Gew.-% (jeweils bezogen auf Monomere) eingesetzt wird und

iii) das Einsatzgewichtsverhältnis Radikalbildner R:Emulgator bei der Pfropfpolymerisation 1:1 bis 1:5, vorzugsweise 1:1 bis 1:3, beträgt.

Vorzugsweise erfolgt die Pfropfpolymerisation durch Monomerenzulauf zum Gemisch der Butadienpolymerisatlatices (A) und (B) in der Weise, daß innerhalb der ersten Hälfte der Monomerenzulaufzeit 55 bis 90 Gew.-%, vorzugsweise 60 bis 80 Gew.-% und besonders bevorzugt 65 bis 75 Gew.-% der Monomeren zudosiert werden.

In einer weiteren bevorzugten Ausführungsform der vorliegenden Erfindung erfolgt die Pfropfpolymerisation durch Monomerenzulauf und Zugabe des Inititators zusammen mit der Emulgatorlösung in einem separaten Zulauf.

Außer den oben genannten Polymerharzkomponenten können die erfindungsgemäßen Formmassen weitere kautschukfreie, nicht aus Vinylmonomeren aufgebaute Thermoplastharze enthalten.

Bei der Pfropfpolymerisation wird ein Gemisch aus mindestens zwei Butadienpolymerisatlatices, je einen von Typ (A) und (B), eingesetzt. Das Gewichtsverhältnis (A):(B) beträgt, bezogen auf den jeweiligen Feststoffanteil der Latices, vorzugsweise 90:10 bis 10:90, besonders bevorzugt 60:40 bis 30:70.

Die Butadienpolymerisatlatices (A) und (B) können durch Emulsionspolymerisation von Butadien hergestellt werden. Diese Polymerisation ist bekannt und z.B. in Houben-Weyl, Methoden der Organischen Chemie, Makromolekulare Stoffe, Teil 1, S. 674 (1961), Thieme Verlag Stuttgart, beschrieben. Als Comonomere können bis zu 50 Gew.-% (bezogen auf die gesamte zur Butadienpolymerisatherstellung eingesetzte Monomerenmenge) eines oder mehrerer mit Butadien copolymerisierbarer Monomerer eingesetzt werden.

Beispiele für solche Monomere sind Isopren, Chloropren, Acrylnitril, Styrol, α-Methylstyrol, $C_1$-$C_4$-Alkylstyrole, $C_1$-$C_8$-Alkylacrylate, $C_1$-$C_8$-Alkylmethacrylate, Alkylenglycoldiacrylate, Alkylenglykoldimethacrylate, Divinylbenzol; vorzugsweise wird Butadien alleine eingesetzt. Es ist auch möglich, nach bekannten Methoden zunächst ein feinteiliges Butadienpolymerisat herzustellen und es anschließend in bekannter Weise zur Einstellung der erforderlichen Teilchengröße zu agglomerieren.

Einschlägige Techniken sind beschrieben (vergl. EP-PS 0 029 613; EP-PS 0 007 810; DD-PS 144 415 DE-AS 1 233 131; DE-AS 1 258 076; DE-OS 2 101 650; US-PS 1 379 391).

Ebenfalls kann nach der sogenannten Saatpolymerisationstechnik gearbeitet werden, bei der zunächst ein feinteiliges Butadienpolymerisat hergestellt und dann durch Weiterumsatz mit Butadien enthaltenden Monomeren zu größeren Teilchen weiterpolymerisiert wird.

Prinzipiell kann man die Butadienpolymerisatlatices (A) und (B) auch herstellen durch Emulgieren von feinteiligen Butadienpolymerisaten in wäßrigen Medien (vergl. japanische Patentanmeldung 55 125 102).

Der Butadienpolymerisatlatex (A) besitzt einen mittleren Teilchendurchmesser $d_{50}$ ≤320 nm, vorzugsweise 260 bis 310 nm, eine Breite der Teilchengrößenverteilung (gemessen als $d_{90}$-$d_{10}$ aus der integralen Teilchengrößenverteilung) von 30 bis 100 nm, vorzugsweise von 40 bis 80 nm, und einen Gelgehalt ≤70 Gew.-%, vorzugsweise 40

bis 65 Gew.-%.

Der Butadienpolymerisatlatex (B) besitzt einen mittleren Teilchendurchmesser $d_{50}$ ≥370 nm, vorzugsweise 380 bis 450 nm, eine Breite der Teilchengrößenverteilung (gemessen als $d_{90}$-$d_{10}$ aus der integralen Teilchengrößenverteilung) von 50 bis 500 nm, vorzugsweise von 100 bis 400 nm, und einen Gelgehalt ≥70 Gew.-%, vorzugsweise 75 bis 90 Gew.-%.

Die Bestimmung des mittleren Teilchendurchmesser $d_{50}$ sowie der $d_{10}$- und $d_{90}$-Werte kann durch Ultrazentrifugenmessung erfolgen (vgl. W. Scholtan, H. Lange: Kolloid Z. u. Z. Polymere 250, S. 782 bis 796 (1972)), die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte der Butadienpolymerisatlatices (A) und (B) können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgatoren können die üblichen anionischen Emulgatoren wie Alkylsulfate, Alkylsulfonate, Aralkylsulfonate, Seifen gesättigter oder ungesättigter Fettsäuren sowie alkalischer disproportionierter oder hydrierter Abietin- oder Tallölsäuren verwendet werden, vorzugsweise werden Emulgatoren mit Carboxylgruppen (z.B. Salze von $C_{10}$-$C_{18}$-Fettsäuren, disproportionierte Abietinsäure) eingesetzt.

Die Pfropfpolymerisation kann so durchgeführt werden, daß das Monomerengemisch kontinuierlich zu dem Gemisch der Butadienpolymerisatlatices (A) und (B) gegeben und polymerisiert wird.

Dabei werden bevorzugt spezielle Monomer: Kautschuk-Verhältnisse und eine definierte Vorgehensweise bei der Monomerzugabe zum Kautschuklatex eingehalten.

Zur Erzeugung der erfindungsgemäßen Produkte werden vorzugsweise 25 bis 70 Gew.-Teile, besonders bevorzugt 30 bis 60 Gew.-Teile, eines Gemisches aus Styrol und Acrylnitril, das gegebenenfalls bis zu 50 Gew.-% (bezogen auf Gesamtmenge der in der Pfropfpolymerisation eingesetzten Monomeren) eines oder mehrerer Comonomerer enthalten kann, in Gegenwart von vorzugsweise 30 bis 75 Gew.-Teilen, besonders bevorzugt 40 bis 70 Gew.-Teilen (jeweils bezogen auf Feststoff) des Butadienpolymerisatlatex-Gemisches aus (A) und (B) polymerisiert.

Die bei dieser Pfropfpolymerisation eingesetzten Monomeren sind vorzugsweise Mischungen aus Styrol und Acrylnitril im Gew.-Verhältnis 90:10 bis 50:50, besonders bevorzugt im Gewichtsverhältnis 65:35 bis 75:25, wobei Styrol und/oder Acrylnitril ganz oder teilweise durch copolymerisierbare Monomere, vorzugsweise durch α-Methylstyrol, Methylmethacrylat oder N-Phenylmaleinimid ersetzt werden können.

Zusätzlich können bei der Pfropfpolymerisation Molekulargewichtsregler eingesetzt werden, vorzugsweise in Mengen von 0,05 bis 3 Gew.-%, besonders bevorzugt in Mengen von 0,1 bis 2 Gew.-% (jeweils bezogen auf Gesamtmonomermenge in der Pfropfpolymerisationsstufe).

Geeignete Molekulargewichtsregler sind beispielsweise n-Dodecylmercaptan, t-Dodecylmercaptan, dimeres α-Methylstyrol, Terpinolen.

Als Radikalbildner kommen bei der Pfropfpolymerisation Verbindungen der allgemeinen Formel

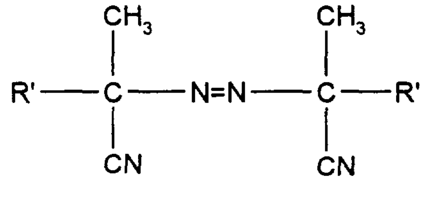

R

mit R' = $C_2H_5$, $C_3H_7$, $C_4H_9$,

in Betracht, wobei die Isomeren Reste n-$C_3H_7$, i-$C_3H_7$, n-$C_4H_9$, i-$C_4H_9$, t-$C_4H_9$ eingeschlossen sind, besonders bevorzugt ist die Verbindung R mit R' = $C_2H_5$.

Dabei wird der Radikalbildner in Mengen von 1 bis 5 Gew.-%, bevorzugt 1,5 bis 3 Gew.-% (jeweils bezogen auf die eingesetzten Monomeren) eingesetzt.

Die Reaktionstemperatur ist 40°C bis 120°C, vorzugsweise 45°C bis 100°C und besonders bevorzugt 50°C bis 90°C.

Als Emulgatoren können die obengenannten Verbindungen eingesetzt werden, bevorzugt sind Emulgatoren mit Carboxylgruppen.

Die Einsatzmengen an Emulgator bei der Pfropfreaktion müssen zur Erzielung des erfindungsgemäßen Effektes einer sehr hohen Zähigkeit so gewählt werden, daß das Gewichtsverhältnis Radikalbildner:Emulgator einen Wert von ca. 1:0,9 nicht überschreitet, vorzugsweise wird ein Gewichtsverhältnis Radikalbildner R:Emulgator von 1:1 bis 1:5, besonders bevorzugt von 1:1 bis 1:3, eingestellt.

Zur Erzeugung der erfindungsgemäßen Produkte wird die Pfropfpolymerisation vorzugsweise durch Monomerenzulauf derart durchgeführt werden, daß innerhalb der ersten Hälfte der Gesamtmonomerzudosierzeit 55 bis 90 Gew.-%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert.

Schließlich wird das so erzeugte Pfropfpolymerisat mit mindestens einem thermoplastischen Harz gemischt. Dies ist auf verschiedene Weise möglich. Wurde das Thermoplastharz selbst durch Emulsionspolymerisation erzeugt, so können die Latices gemischt und gemeinsam ausgefällt und aufgearbeitet werden. Wurde das Thermoplastharz durch Lösungs- oder Massepolymerisation hergestellt, so muß das Pfropfpolymerisat durch bekannte Verfahren, beispielsweise durch Sprühtrocknung oder durch Zusatz von Salzen und/oder Säuren, Waschen der Fällprodukte und Trocknung des Pulvers isoliert und danach mit dem vorzugsweise in Granulatform vorliegenden Thermoplastharz vermischt werden (vorzugsweise auf Mehrwalzenstühlen, Mischextrudern oder Innenknetern); diese Methode wird bevorzugt angewandt.

Als Vinylharze werden vorzugsweise Copolymerisate des Styrols und Acrylnitrils im Gewichtsverhältnis 90:10 bis 50:50 eingesetzt, wobei Styrol und/oder Acrylnitril ganz oder teilweise durch α-Methylstyrol und/oder Methylmethacrylat ersetzt sein kann; gegebenenfalls kann anteilmäßig bis zu 30 Gew.-%, bezogen auf Vinylharz, eines weiteren Monomeren aus der Reihe Maleinsäureanhydrid, Maleinsäureimid, N-(Cyclo)-Alkylmaleinimid, N-(Alkyl)-Phenylmaleinimid mitverwendet werden.

Einzelheiten zur Herstellung dieser Harze sind beispielsweise in der DE-AS 2 420 358 und der DE-AS 2 724 360 beschrieben. Durch Masse- bzw. Lösungspolymerisation hergestellte Vinylharze haben sich besonders bewährt.

Außer derartigen aus Vinylmonomeren aufgebauten Thermoplastharzen ist auch die Verwendung von z.B. aromatischen Polycarbonaten, aromatischen Polyestercarbonaten, Polyestern, Polyamiden als Harzkomponente in den erfindungsgemäßen Formmassen möglich.

Geeignete thermoplastische Polycarbonate bzw. Polyestercarbonate sind bekannt (vgl. z.B. DE-AS 1 495 626, DE-OS 2 232 877, DE-OS 2 703 376, DE-OS 2 714 544, DE-OS 3 000 610, DE-OS 3 832 396, DE-OS 3 077 934), z.B. herstellbar durch Umsetzung von Diphenolen der Formeln (I) und (II)

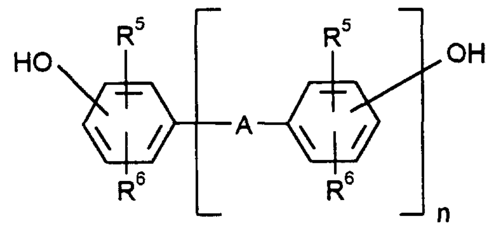

(I)

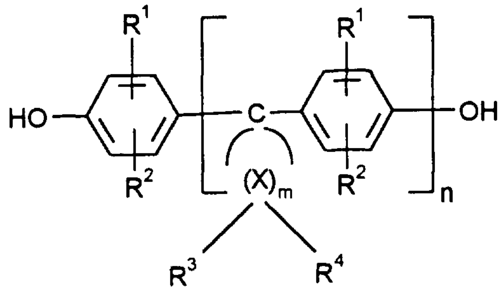

(II)

worin

A eine Einfachbindung, $C_1$-$C_5$-Alkylen, $C_2$-$C_5$-Alkyliden, $C_5$-$C_6$-Cycloalkyliden, -O-, -S-, -SO-, -$SO_2$- oder

-CO- ist,

$R^5$ und $R^6$ unabhängig voneinander für Wasserstoff, Methyl oder Halogen, insbesondere für Wasserstoff, Methyl, Chlor oder Brom stehen,

$R^1$ und $R^2$ unabhängig voneinander Wasserstoff, Halogen bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_2$-Aralkyl, bevorzugt Phenyl-$C_1$-$C_4$-alkyl, insbesondere Benzyl, bedeuten,

m eine ganze Zahl von 4 bis 7, bevorzugt 4 oder 5 ist,

n 0 oder 1 ist,

$R^3$ und $R^4$ für jedes X individuell wählbar sind und unabhängig voneinander Wasserstoff oder $C_1$-$C_6$-Alkyl bedeuten und

X Kohlenstoff bedeutet,

mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren oder mit Phosgen nach dem Verfahren in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (I) und (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (I) sind 2,2-Bis-(4-hydroxyphenyl)-propan und 1,1-Bis-(4-hydroxyphenyl)-cyclohexan, bevorzugtes Phenol der Formel (II) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (I) und (II).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte ($\overline{M}_w$, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, das heißt, Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norboman und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diaminodicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Der Anteil des Pfropfkautschuks an den erfindungsgemäßen Formmassen läßt sich in weiten Grenzen variieren; vorzugsweise beträgt er 10 bis 80 Gew.-%, besonders bevorzugt 20 bis 75 Gew.-%.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.
Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.
In den folgenden Beispielen sind die angegebenen Teile immer Gewichtsteile und die angegebenen % immer Gew.-%, wenn nicht anders angegeben.

## Beispiele

### Beispiele 1 bis 7

20 Gew.-Teile (gerechnet als Feststoff) eines durch radikalische Polymerisation hergestellten, anionisch emulgierten Polybutadienlatex (Latex A) mit einem $d_{50}$-Wert von 271 nm, einem $d_{90}$-$d_{10}$-Wert von 43 nm und einem Gelgehalt von 51 Gew.-% und 20 Gew.-Teile (gerechnet als Feststoff) eines durch radikalische Polymerisation hergestellten, anionisch emulgierten Polybutadienlatex (Latex B) mit einem $d_{50}$-Wert von 434 nm, einem $d_{90}$-$d_{10}$-Wert von 111 nm und einem Gelgehalt von 85 Gew.-% werden mit Wasser auf einen Feststoffgehalt von ca. 20 Gew.-% gebracht, wonach auf 63°C erwärmt und mit den in Tabelle 1 angegebenen Initiatoren versetzt wird. Danach werden 60 Gew. -Teile eines Gemisches aus 73 Gew.-% Styrol und 27 Gew.-% Acrylnitril und 0,15 Gew.-Teile tert.-Dodecylmercaptan innerhalb von 4 Stunden derart zugegeben, daß innerhalb der ersten 2 Stunden 70 Gew.-% der Gesamtmonomerenmenge zum Reaktionsgemisch zudosiert werden; parallel dazu werden die in Tabelle 1 angegebenen Mengen (gerechnet als Festsubstanz) des Natriumsalzes eines Harzsäuregemisches (Dresinate 731, gelöst in alkalisch eingestelltem Wasser) über 4 Stunden zudosiert.
Nach einer 4-stündigen Nachreaktionszeit werden die Pfropflatices jeweils nach Zugabe von ca. 1,0 Gew. -Teilen eines phenolischen Antioxidans mit einem Magnesiumsulfat/Essigsäure-Gemisch koaguliert und nach dem Waschen mit Wasser die resultierenden Pulver bei 70°C im Vakuum getrocknet.
40 Gew.-Teile des jeweiligen Pfropfpolymerisats werden mit 60 Gew.-Teilen eines Styrol/Acrylnitril-Copolymerharzes (72:28, $\overline{M}_w \approx 115\,000$, $\overline{M}_w/\overline{M}_n$-1≤2), 2 Gew.-Teilen Ethylendiaminbisstearylamid und 0,1 Gew.-Teilen eines Silikonöls in einem Innenkneter vermischt und anschließend zu Prüfstäben verarbeitet.
Folgende Daten wurden ermittelt:

Kerbschlagzähigkeit bei Raumtemperatur ($a_k$) nach ISO 180/1A (Einheit: kJ/$m^2$),
Kugeldruckhärte ($H_c$) nach DIN 53 456 (Einheit: N/$mm^2$),
Wärmeformbeständigkeit (Vicat B) nach DIN 53 460 (Einheit: °C) und
thermoplastische Verarbeitbarkeit durch Bestimmung des notwendigen Fülldrucks bei 240°C (siehe F. Johannaber, Kunststoffe 74 (1984), 1, Seiten 2 bis 5.

Die Ergebnisse sind in Tabelle 2 zusammengestellt. Daraus ist ersichtlich, daß nur die erfindungsgemäßen Formmassen sehr hohe Zähigkeiten ohne negative Beeinflussung der üblichen Eigenschaften aufweisen.

Tabelle 1:

| Mengen und Typ an eingesetzten Initiatoren und Emulgatormengen | | | |
|---|---|---|---|
| Beispiel | Initiatortyp | Initiatormenge [Gew.-Teile] | Emulgatormenge [Gew.-Teile] |
| 1 | R mit R' = $C_2H_5$*) | 1 | 1 |
| 2 | R mit R' = $C_2H_5$*) | 1 | 1,5 |
| 3 | R mit R' = $C_2H_5$*) | 1 | 2 |
| 4 (Vergleich) | R mit R' = $C_2H_5$*) | 1 | 0,5 |
| 5 (Vergleich) | R mit R' = $C_2H_5$*) | 0,5 | 1 |
| 6 (Vergleich) | $K_2S_2O_8$ | 0,5 | 1 |

*) Vazo 67 (DuPont)

Tabelle 1: (fortgesetzt)

| Mengen und Typ an eingesetzten Initiatoren und Emulgatormengen | | | |
|---|---|---|---|
| Beispiel | Initiatortyp | Initiatormenge [Gew.-Teile] | Emulgatormenge [Gew.-Teile] |
| 7 (Vergleich) | R mit R' = $CH_3$**) | 1 | 1 |

**) Vazo 64 (DuPont)

Tabelle 2:

| Prüfdaten der Formmassen aus Beispielen 1 bis 7 | | | | |
|---|---|---|---|---|
| Beispiel | $a_k$ ($kJ/m^2$) | $H_c$ ($N/mm^2$) | Vicat B (°C) | Fülldruck (bar) |
| 1 | 40,1 | 97 | 101 | 184 |
| 2 | 42,6 | 96 | 101 | 176 |
| 3 | 38,8 | 98 | 100 | 175 |
| 4 (Vergleich) | 35,5 | 96 | 99 | 185 |
| 5 (Vergleich) | 35,1 | 99 | 100 | 180 |
| 6 (Vergleich) | 32,5 | 97 | 100 | 168 |
| 7 (Vergleich) | 34,6 | 96 | 98 | 175 |

**Beispiele 8 bis 12**

50 Gew.-Teile (gerechnet als Feststoff) durch radikalische Polymerisation hergestellter, anionisch emulgierter Polybutadienlatex der in Tabelle 3 angegebenen Zusammensetzung werden mit Wasser auf einen Feststoffgehalt von ca. 20 Gew.-% gebracht, wonach auf 63°C erwärmt und mit den in Tabelle 3 angegebenen Initiatoren versetzt wird. Danach werden 50 Gew.-Teile eines Gemisches aus 73 Gew.-% Styrol und 27 Gew.-% Acrylnitril und 0,15 Gew.-Teile tert.-Dodecylmercaptan innerhalb von 4 Stunden derart zugegeben, daß innerhalb der ersten 2 Stunden 70 Gew.-% der Gesamtmonomerenmenge zum Reaktionsgemisch zudosiert werden; parallel dazu werden die in Tabelle 3 angegebenen Mengen (gerechnet als Festsubstanz) des Natriumsalzes eines Harzsäuregemisches (Dresinate 731, gelöst in alkalisch eingestelltem Wasser) über 4 Stunden zudosiert.

Nach einer 4-stündigen Nachreaktionszeit werden die Pfropflatices jeweils nach Zugabe von ca. 1,0 Gew.-Teilen eines phenolischen Antioxidans mit einem Magnesiumsulfat/Essigsäure-Gemisch koaguliert und nach dem Waschen mit Wasser die resultierenden Pulver bei 70°C im Vakuum getrocknet.

32 Gew.-Teile des jeweiligen Pfropfpolymerisats werden mit 68 Gew.-Teilen eines Styrol/Acrylnitril-Copolymerharzes (72:28, $\overline{M}_w \approx 115\ 000$, $\overline{M}_w/\overline{M}_n-1 \leq 2$ Gew.-Teilen Ethylendiaminbisstearylamid und 0,1 Gew.-Teilen eines Silikonöls in einem Innenkneter vermischt und anschließend zu Prüfstäben verarbeitet, an denen die oben beschriebenen Daten ermittelt wurden.

Die Ergebnisse sind in Tabelle 4 zusammengefaßt.

Tabelle 3:

| Kautschukzusammensetzungen, Mengen und Typ an eingesetzten Initiatoren und Emulgatoren | | | | | |
|---|---|---|---|---|---|
| Beispiel | Latex A aus Beispielen 1 bis 7 [Gew.-Teile] | Latex B aus Beispielen 1 bis 7 [Gew.-Teile] | Initiatortyp | Initiatormenge [Gew.-Teile] | Emulgatormenge [Gew.-Teile] |
| 8 | 25 | 25 | R mit R' = $C_2H_5$*) | 1 | 1 |
| 9 (Vergleich) | 25 | 25 | R mit R' = $C_2H_5$*) | 0,3 | 1 |
| 10 (Vergleich) | 25 | 25 | $K_2S_2O_8$ | 0,5 | 1 |

*) Vazo 67 (DuPont)

Tabelle 3: (fortgesetzt)

| Kautschukzusammensetzungen, Mengen und Typ an eingesetzten Initiatoren und Emulgatoren | | | | | |
|---|---|---|---|---|---|
| Beispiel | Latex A aus Beispielen 1 bis 7 [Gew.-Teile] | Latex B aus Beispielen 1 bis 7 [Gew.-Teile] | Initiatortyp | Initiatormenge [Gew.-Teile] | Emulgatormenge [Gew.-Teile] |
| 11 (Vergleich) | 50 | 0 | R mit R' = $C_2H_5$*) | 1 | 1 |
| 12 (Vergleich) | 0 | 50 | R mit R' = $C_2H_5$*) | 1 | 1 |

*) Vazo 67 (DuPont)

Tabelle 4:

| Prüfdaten der Formmassen aus Beispielen 8 bis 12 | | | | |
|---|---|---|---|---|
| Beispiel | $a_k$ ($kJ/m^2$) | $H_c$ ($N/mm^2$) | Vicat B (°C) | Fülldruck (bar) |
| 8 | 36,6 | 103 | 102 | 172 |
| 9 (Vergleich) | 31,8 | 102 | 101 | 173 |
| 10 (Vergleich) | 25,3 | 103 | 102 | 175 |
| 11 (Vergleich) | 33,3 | 101 | 102 | 169 |
| 12 (Vergleich) | 30,5 | 100 | 100 | 170 |

**Patentansprüche**

**1.** Thermoplastische Formmassen vom ABS-Typ aus

I) mindestens einem Pfropfpolymerisat, erhalten durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart von mindestens zwei Butadienpolymerisatlatices vom Typ (A) und (B), welche jeweils 0 bis 50 Gew.-% eines weiteren Vinylmonomeren copolymerisiert enthalten und wobei das Massenverhältnis von eingesetzten Monomeren zu eingesetzten Butadienpolymerisaten 20:80 bis 80:20 beträgt, und

II) mindestens einem Copolymerisat aus Styrol und Acrylnitril im Gewichtsverhältnis 90:10 bis 50:50, wobei Styrol und/oder Acrylnitril ganz oder teilweise durch α-Methylstyrol oder Methylmethacrylat oder N-Phenylmaleinimid ersetzt werden kann,

**dadurch gekennzeichnet, daß**

i) der Butadienpolymerisatlatex (A) einen Teilchendurchmesser $d_{50}$ ≤320 nm, eine Breite der Teilchengrößenverteilung (gemessen als $d_{90}$-$d_{10}$ aus der integralen Teilchengrößenverteilung) von 30 bis 100 nm und einen Gelgehalt ≤70 Gew.-% besitzt und der Butadienpolymerisatlatex (B) einen Teilchendurchmesser $d_{50}$ ≥370 nm, eine Breite der Teilchengrößenverteilung (gemessen als $d_{90}$-$d_{10}$ aus der integralen Teilchengrößenverteilung) von 50 bis 500 nm und einen Gelgehalt ≥70 Gew.-% aufweist,

ii) als Radikalbildner bei der Pfropfpolymerisatherstellung mindestens eine Verbindung der allgemeinen Formel (R)

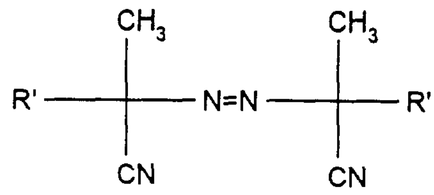

(R)

mit R' = $C_2H_5$, $C_3H_7$, $C_4H_9$,
in Mengen von 1 bis 5 Gew.-% (bezogen auf Monomere) eingesetzt wird und

iii) das Einsatzgewichtsverhältnis Radikalbildner R:Emulgator bei der Pfropfpolymerisation 1:1 bis 1:5 beträgt.

2. Thermoplastische Formmassen vom ABS-Typ gemäß Anspruch 1, zusätzlich **dadurch gekennzeichnet, daß** die Pfropfpolymerisation durch Monomerenzulauf zum Gemisch der Butadienpolymerisatlatices (A) und (B) in der Weise erfolgt, daß innerhalb der ersten Hälfte der Monomerenzulaufzeit 55 bis 90 Gew.-% der Monomeren zudosiert werden.

3. Thermoplastische Formmassen vom ABS-Typ aus

I) mindestens einem Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart von mindestens zwei Butadienpolymerisatlatices vom Typ (A) und (B), welche jeweils 0 bis 50 Gew.-% eines weiteren Vinylmonomeren copolymerisiert enthalten und wobei das Massenverhältnis von eingesetzten Monomeren zu eingesetzten Butadienpolymerisaten 30:70 bis 75:25 beträgt, und

II) mindestens einem Copolymerisat aus Styrol und Acrylnitril im Gewichtsverhältnis 90:10 bis 50:50, wobei Styrol und/oder Acrylnitril ganz oder teilweise durch α-Methylstyrol oder Methylmethacrylat oder N-Phenylmaleinimid ersetzt werden kann,

**dadurch gekennzeichnet, daß**

i) der Butadienpolymerisatlatex (A) einen Teilchendurchmesser $d_{50}$ von 260 bis 310 nm, eine Breite der Teilchengrößenverteilung (gemessen als $d_{90}$-$d_{10}$ aus der integralen Teilchengrößenverteilung) von 40 bis 80 nm, und einen Gelgehalt von 40 bis 65 Gew.-% besitzt und der Butadienpolymerisatlatex (B) einen Teilchendurchmesser $d_{50}$ von 380 bis 450 nm, eine Breite der Teilchengrößenverteilung (gemessen als $d_{90}$-$d_{10}$ aus der integralen Teilchengrößenverteilung) von 100 bis 400 nm und einen Gelgehalt von 75 bis 90 Gew.-%, aufweist,

ii) als Radikalbildner bei der Pfropfpolymerisatherstellung eine Verbindung der Formel

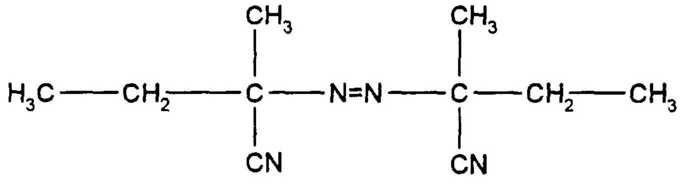

in Mengen von 1,5 bis 3 Gew.-% (bezogen auf Monomere) eingesetzt wird und

iii) das Einsatzgewichtsverhältnis Radikalbildner:Emulgator bei der Pfropfpolymerisation 1:1 bis 1:3 beträgt.

4. Thermoplastische Formmassen vom ABS-Typ gemäß Anspruch 3, zusätzlich **dadurch gekennzeichnet, daß** die Pfropfpolymerisation durch Monomerenzulauf zum Gemisch der Butadienpolymerisatlatices (A) und (B) in der

Weise erfolgt, daß innerhalb der ersten Hälfte der Monomerenzulaufzeit 60 bis 80 Gew.-% der Monomeren zudosiert werden.

**5.** Thermoplastische Formmassen vom ABS-Typ gemäß Ansprüchen 1 bis 4, **dadurch gekennzeichnet, daß** zusätzlich mindestens ein Harz ausgewählt aus aromatischem Polycarbonat, aromatischem Polyestercarbonat, Polyester, Polyamid enthalten ist.

**6.** Verwendung der thermoplastischen Formmassen gemäß Ansprüchen 1 bis 5 zur Herstellung von Formteilen.

**Claims**

**1.** Thermoplastic moulding compositions of the ABS type, comprising

I) at least one graft polymer, obtained by the emulsion polymerisation of styrene and acrylonitrile in a weight ratio of 90:10 to 50:50, wherein styrene and/or acrylonitrile can be completely or partially replaced by $\alpha$-methylstyrene, methyl methacrylate or N-phenylmaleinimide, in the presence of at least two butadiene polymer latices of type (A) and (B), which each contain 0 to 50 % by weight of a further copolymerised vinyl monomer and wherein the weight ratio of the monomers used to the butadiene polymers used is 20:80 to 80:20,

II) at least one copolymer of styrene and acrylonitrile in a weight ratio of 90:10 to 50:50, wherein styrene and/or acrylonitrile can be completely or partially replaced by $\alpha$-methylstyrene, methyl methacrylate or N-phenylmaleinimide,

**characterised in that**

i) butadiene polymer latex (A) has a particle diameter $d_{50} \leq 320$ nm, a particle size distribution range (measured as $d_{90}$-$d_{10}$ from the integral particle size distribution) from 30 to 100 nm, and a gel content $\leq 70$ % by weight, and the butadiene polymer latex (B) has a particle diameter $d_{50} \geq 370$ nm, a particle size distribution range (measured as $d_{90}$-$d_{10}$ from the integral particle size distribution) from 50 to 500 nm, and a gel content $\geq 70$ % by weight,

ii) at least one compound of general formula (R)

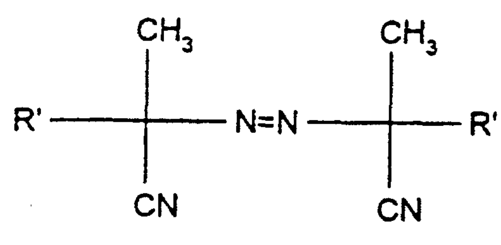

(R)

where R' = $C_2H_5$, $C_3H_7$, $C_4H_9$,
is used in amounts of 1 to 5 % by weight (based on the monomers) as a radical former in the production of the graft polymer, and

iii) the weight ratio of radical former R:emulsifier which is used in the graft polymerisation is 1:1 to 1:5.

**2.** Thermoplastic moulding compositions of the ABS type according to claim 1, additionally **characterised in that** the graft polymerisation is conducted by feeding monomers into the mixture of butadiene polymer latices (A) and (B) in such a way that 55 to 90 % by weight of the monomers are added within the first half of the monomer addition period.

**3.** thermoplastic moulding compositions of the ABS type, comprising

I) at least one graft polymer, which is obtainable by the emulsion polymerisation of styrene and acrylonitrile in a weight ratio of 90:10 to 50:50, wherein styrene and/or acrylonitrile can be completely or partially replaced by α-methylstyrene, methyl methacrylate or N-phenylmaleinimide, in the presence of at least two butadiene polymer latices of type (A) and (B), which each contain 0 to 50 % by weight of a further copolymerised vinyl monomer and wherein the weight ratio of the monomers used to the butadiene polymers used is 30:70 to 75:25,
II) at least one copolymer of styrene and acrylonitrile in a weight ratio of 90:10 to 50:50, wherein styrene and/or acrylonitrile can be completely or partially replaced by α-methylstyrene, methyl methacrylate or N-phenylmaleinimide,

**characterised in that**

i) butadiene polymer latex (A) has a particle diameter $d_{50}$ of 260 to 310 nm, a particle size distribution range (measured as $d_{90}$-$d_{10}$ from the integral particle size distribution) from 40 to 80 nm, and a gel content of 40 to 65 % by weight, and the butadiene polymer latex (B) has a particle diameter $d_{50}$ of 380 to 450 nm, a particle size distribution range (measured as $d_{90}$-$d_{10}$ from the integral particle size distribution) from 100 to 400 nm, and a gel content of 75 to 90 % by weight,

ii) a compound of formula

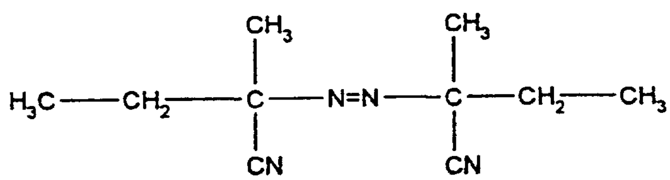

is used in amounts of 1.5 to 3 % by weight (based on the monomers) as a radical former in the production of the graft polymer, and

iii) the weight ratio of radical former R:emulsifier which is used in the graft polymerisation is 1:1 to 1:3.

**4.** Thermoplastic moulding compositions of the ABS type according to claim 3, additionally **characterised in that** the graft polymerisation is conducted by feeding monomers into the mixture of butadiene polymer latices (A) and (B) in such a way that 60 to 80 % by weight of the monomers are added within the first half of the monomer addition period.

**5.** Thermoplastic moulding compositions of the ABS type according to claims 1 to 4, **characterised in that** at least one resin is additionally contained which is selected from an aromatic polycarbonate, aromatic polyester carbonate, polyester or polyamide.

**6.** The use of the thermoplastic moulding compositions according to claims 1 to 5 for the production of mouldings.

## Revendications

**1.** Masses à mouler thermoplastiques de type ABS constituées par

I) au moins un polymère greffé obtenu par polymérisation en émulsion du styrène et de l'acrylonitrile dans le rapport massique 90:10 à 50:50, où le styrène et/ou l'acrylonitrile peuvent être remplacés en totalité ou en partie par l'α-méthylstyrène, le méthacrylate de méthyle ou le N-phénylmaléimide, en présence d'au moins deux latex de polymères de butadiène de type (A) et (B) qui contiennent chacun 0 à 50 % en masse d'un autre monomère vinylique à l'état copolymérisé et où le rapport massique des monomères utilisés aux polymères de butadiène utilisés est 20:80 à 80:20, et
II) au moins un copolymère du styrène et de l'acrylonitrile dans le rapport massique 90:10 à 50:50, où le styrène et/ou l'acrylonitrile peuvent être remplacés en totalité ou en partie par l'α-méthylstyrène ou le méthacrylate de méthyle ou le N-phénylmaléimide

**caractérisées en ce que**

i) le latex de polymère de butadiène (A) possède un diamètre de particule $d_{50} \leq 320$ nm, une largeur de la répartition granulométrique (mesurée sous forme de $d_{90}$-$d_{10}$ à partir de la répartition granulométrique intégrale) de 30 à 100 nm et une teneur en gel ≤ 70 % en masse et le latex de polymère de butadiène (B) présente un diamètre de particule $d_{50} > 370$ nm, une largeur de la répartition granulométrique (mesurée sous forme de $d_{90}$-$d_{10}$ à partir de la répartition granulométrique intégrale) de 50 à 500 nm et une teneur en gel ≥ 70 % en masse,
ii) comme générateur de radicaux lors de la production du polymère greffé, on utilise au moins un composé de formule générale (R)

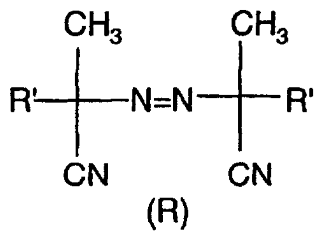

(R)

avec R' = $C_2H_5$, $C_3H_7$, $C_4H_9$,
en des quantités de 1 à 5 % en masse (par rapport aux monomères) et
iii) le rapport massique générateur de radicaux R:émulsifiant utilisé lors de la polymérisation par greffage est 1:1 à 1:5.

**2.** Masses à mouler thermoplastiques de type ABS selon la revendication 1, **caractérisées en outre en ce que** la polymérisation par greffage a lieu par addition de monomères au mélange des latex de polymères de butadiène (A) et (B) de telle manière que 55 à 90 % en masse des monomères sont ajoutés au cours de la première moitié de la période d'addition des monomères.

**3.** Masses à mouler thermoplastiques de type ABS constituées par

I) au moins un polymère greffé qui est obtenu par polymérisation en émulsion du styrène et de l'acrylonitrile dans le rapport massique 90:10 à 50:50, où le styrène et/ou l'acrylonitrile peuvent être remplacés en totalité ou en partie par l'α-méthylstyrène, le méthacrylate de méthyle ou le N-phénylmaléimide, en présence d'au moins deux latex de polymères de butadiène de type (A) et (B), qui contiennent chacun 0 à 50 % en masse d'un autre monomère vinylique à l'état copolymérisé et où le rapport massique des monomères utilisés aux polymères de butadiène utilisés est 30:70 à 75:25, et
II) au moins un copolymère du styrène et de l'acrylonitrile dans le rapport massique 90:10 à 50:50, où le styrène et/ou l'acrylonitrile peuvent être remplacés en totalité ou en partie par l'α-méthylstyrène ou le méthacrylate de méthyle ou le N-phénylmaléimide

**caractérisées en ce que**

i) le latex de polymère de butadiène (A) possède un diamètre de particule d50 de 260 à 310 nm, une largeur de la répartition granulométrique (mesurée sous forme de $d_{90}$-$d_{10}$ à partir de la répartition granulométrique intégrale) de 40 à 80 nm et une teneur en gel de 40 à 65 % en masse et le latex de polymère de butadiène (B) présente un diamètre de particule $d_{50}$ de 380 à 450 nm, une largeur de la répartition granulométrique (mesurée sous forme de $d_{90}$-$d_{10}$ à partir de la répartition granulométrique intégrale) de 100 à 400 nm et une teneur en gel de 75 à 90 % en masse,
ii) comme générateur de radicaux lors de la préparation du polymère greffé, on utilise un composé de formule

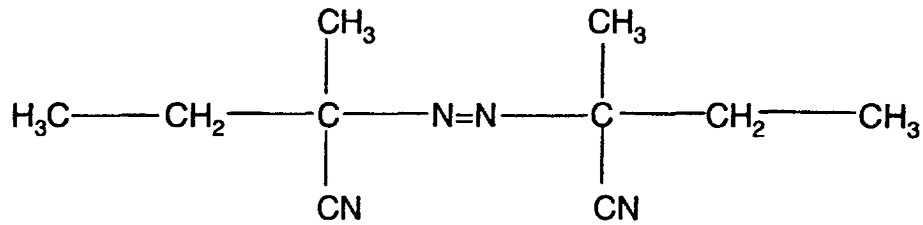

en des quantités de 1,5 à 3 % en masse (par rapport aux monomères) et

iii) le rapport massique générateur de radicaux:émulsifiant utilisé lors de la polymérisation par greffage est 1:1 à 1:3.

**4.** Masses à mouler thermoplastiques de type ABS selon la revendication 3, **caractérisées en outre en ce que** la polymérisation par greffage se déroule par addition de monomères au mélange des latex de polymères de butadiène (A) et (B) de telle manière que 60 à 80 % en masse des monomères sont ajoutés au cours de la première moitié de la période d'addition des monomères.

**5.** Masses à mouler thermoplastiques de type ABS selon les revendications 1 à 4, **caractérisées en ce qu'**au moins une résine choisie parmi les polycarbonates aromatiques, les polyestercarbonates aromatiques, les polyesters et les polyamides est contenue en outre.

**6.** Utilisation des masses à mouler thermoplastiques selon les revendications 1 à 5 pour la production de pièces moulées.